# EUROPÄISCHE PATENTSCHRIFT

(11) **EP 1 103 328 B1**
(45) Veröffentlichungstag und Bekanntmachung des Hinweises auf die Patenterteilung: **31.03.2004**
(21) Anmeldenummer: 00119971.0
(22) Anmeldetag: 14.09.2000
(51) Int. Cl.: B23D 47/02

(54) **Plattenauflageleiste für Maschinentische von Plattensägemaschinen**
Panel support bar for table of panel saws
Barre de support de panneau pour table de scies à panneaux

(30) Priorität: 24.11.1999 DE 19956459
(43) Veröffentlichungstag der Anmeldung: 30.05.2001
(73) Patentinhaber: HOLZMA Plattenaufteiltechnik GmbH, 75365 Calw-Holzbronn (DE)
(72) Erfinder: Heller, Heribert, 72218 Wildberg (DE)
(74) Vertreter: Dreiss, Fuhlendorf, Steimle & Becker

(56) Entgegenhaltungen:
- DE-A- 19 713 695
- DE-C- 4 031 027
- US-A- 2 323 248

## Beschreibung

Die Erfindung betrifft eine Plattenauflageleiste für Maschinentische von Plattensägemaschinen, in einer Ausbildung gemäß dem Oberbegriff des Anspruches 1.

Solche Plattenauflageleisten werden auf der Tischoberseite von Maschinentischen beiderseits und quer zu einem die Tischplatte für ein unter Tisch fahrendes Sägeaggregat in vertikaler Richtung durchsetzenden Schnittspalt im Seitenabstand voneinander vorgesehen.

Sie bilden zwischen sich seitlich des Schnittspaltes zueinander fluchtende Eingriffsnuten, die dazu dienen, in der Schlussphase einer Plattenaufteiloperation den unteren Zangenschenkel einer das üblicherweise zu einem Plattenpaket bündig aufeinander geschichtete Plattenmaterial für dessen Vor- und ggf. Rücktransport festhaltenden Spannzange einer Plattenvorschubvorrichtung aufzunehmen.

Es besteht dadurch bspw. die Möglichkeit, ein Platten- oder Plattenpaketreststück über den Schnittspalt hinweg und ggf. zu einer am Maschinentisch ausschubseitig vorgesehenen Abfallklappe transportieren zu können.

Das unter Tisch fahrende Sägeaggregat ist üblicherweise, abgesehen von einem Vorritzsägeblatt, mit wenigstens einem Kreissägeblatt bestückt, das, beim Trennschnitt dem Vorritzsägeblatt nacheilend, das Plattenmaterial durchtrennt.

Das Kreissägeblatt weist in der Regel eine Dicke von wenigen Millimetern, bspw. 5,5 mm auf, weshalb üblicherweise die Plattenauflageleisten einen Schnittspalt in einer Breite von ca. 6 mm definieren, während der die Tischplatte durchsetzende Spaltabschnitt eine in der Regel wesentlich größere Breite aufweist.

Durch Elastizitäten im Kreissägeblatt ist dabei unvermeidlich, dass dasselbe bei seiner Rotation unter dem Einfluss hoher Schnittkräfte in seitlicher Richtung ausschwingt bzw. flattert. Dies hat zur Folge, dass dessen Sägezähne mit der den Schnittspalt definierenden Stirnfläche der zueinander fluchtenden Plattenauflageleisten in Eingriff kommen und sich dadurch die Breite des Schnittspaltes sukzessive, bspw. bis auf 20 mm und ggf. mehr vergrößern wird.

Daraus resultiert, dass Anschnitt- oder Reststreifen aufgeteilter Platten bzw. Plattenpakete in den Schnittspalt eingezogen werden und in das sich unterhalb desselben bewegende Sägeaggregat oder in den Maschinenkörper gelangen, der aus Sicherheits- und Schallschutzgründen üblicherweise geschlossen ausgebildet ist.

Dabei vollzieht sich die Vergrößerung der Spaltbreite verhältnismäßig schnell, so dass schon nach relativ kurzen Zeitabständen (wenige Wochen) eine Korrektur der Spaltbreite vorzunehmen ist.

Um hierfür nicht jedes Mal die gesamte Anzahl der vorhandenen Auflageleisten austauschen zu müssen, ist es bereits bekannt, die Plattenauflageleisten zweiteilig auszubilden.

Eines der beiden Leistenteilstücke wird dabei derart angeordnet, dass es in größerem Abstand vor der Trennebene endet. Das andere, entsprechend kurz ausgebildete und aus gut zerspanbarem Metall, wie Messing, bestehende Leistenteilstück wird vor das zur Trennebene entsprechend zurückgesetzte Leistenteilstück angeordnet, begrenzt den Schnittspalt und wird mit der Zeit durch das Kreissägeblatt spaltseitig entsprechend zerspant, worauf es auszutauschen ist.

Um einen schnellen Austausch dieser relativ kurzen Leistenteilstücke zu ermöglichen, ist es weiter bekannt, diese als Bestandteil eines kammartigen Formkörpers vorzusehen, der vor die anderen Leistenteilstücke auf der Tischoberseite zu befestigen ist.

Die einem Verschleiß unterliegenden Leistenteilstücke lassen sich dadurch in einem Arbeitsgang austauschen. Allerdings müssen solche kammartigen Formkörper, deren Herstellung als Frästeile mit entsprechend hohen Kosten verbunden ist, bei Betreibern solcher Plattensägemaschinen stets auf Vorrat gehalten werden.

Aus der DE 40 31 027 C1 ist eine Plattenaufteilanlage bekannt geworden, die zwei fest Leistenteilstücke aufweist.

Es ist deshalb Aufgabe der Erfindung, einen Weg aufzuzeigen, wie sich eine Korrektur der Breite des Schnittspaltes auf das ursprüngliche Spaltmaß erreichen lässt, ohne hierfür jedes Mal Leistenteilstücke bereitzuhalten bzw. ersetzen zu müssen.

Diese Aufgabe wird erfindungsgemäß durch eine Plattenauflageleiste gelöst, die die Merkmale des Anspruchs 1 aufweist.

Die erfindungsgemäße Plattenauflageleiste weist somit ein an einem tischfesten Leistenteilstück in Richtung auf die den Schnittspalt enthaltende Trennebene verstellbar und feststellbar angeordnetes Leistenteilstück auf, das bei notwendig werdenden Korrekturen der Schnittspaltbreite problemlos nachgestellt werden kann. Zwar unterliegt dieses nachstellbare Leistenteilstück gleichfalls einem Zerspanungsverschleiß; jedoch wird ein Ersatz desselben erst nach einer Vielzahl durchgeführter Korrekturmaßnahmen bzw. dann notwendig, wenn die Länge des verstellbaren Leistenteilstückes einen Minimalwert erreicht hat.

Erfindungsgemäß sieht man hierbei das verstellbare Leistenteilstück am tischfesten Leistenteilstück derart vor, dass es das tischfeste Leistenteilstück übergreift, so dass die Plattenauflageleiste als einteiliges Bauteil erscheint. Insbesondere ist das verstellbare Leistenteilstück stufenlos verschiebbar.

Die Länge beider Leistenteilstücke kann dabei so abgestimmt sein, dass auch nach einer letztmals möglichen Zustellung des verstellbaren Leistenteilstückes in Richtung auf die Trennebene das tischfeste Leistenteilstück völlig verdeckt bleibt.

Es bieten sich verschiedene Möglichkeiten zur Führung des verstellbaren Leistenteilstückes am tischfesten Leistenteilstück, wobei ein schwalbenschwanzartiger, gegenseitiger Eingriff beider Leistenteilstücke zu bevorzugen ist, da eine derartige Führung bei entsprechender Auslegung einen leicht vorzunehmenden Austausch des verstellbaren Leistenteilstückes ermöglicht, in dem hierzu dasselbe lediglich zu einer Leistenlängsseite hin gerichtet hochzuschwenken ist. Außerdem können die seitlichen Schrägflächen des Schwalbenschwanzprofils des tischfesten Leistenteilstückes dazu genutzt werden, im Zusammenwirken mit an einer Längsseite des verstellbaren Leistenteilstückes vorgesehenen Spannelementen beim Festlegen des verstellbaren Leistenteilstückes eine Kraftkomponente zu erzeugen, die versucht, das verstellbare Leistenteilstück seitlich des tischfesten Leistenteilstückes an die obere Tischfläche anzupressen.

Die Zeichnung veranschaulicht ein mögliches Ausführungsbeispiel der Erfindung. Es zeigen:
- Figur 1: eine Draufsicht auf einen Maschinentisch einer Plattensägemaschine, der tischoberseitig mit Plattenauflageleisten ausgestattet ist;
- Figur 2: einen Teilquerschnitt des Maschinentisches entlang der Linie II-II der Figur 1, in vergrößertem Maßstab;
- Figur 3: einen Schnitt entlang der Linie III-III der Figur 2 zur Darstellung des Querschnitts der Plattenauflageleisten.

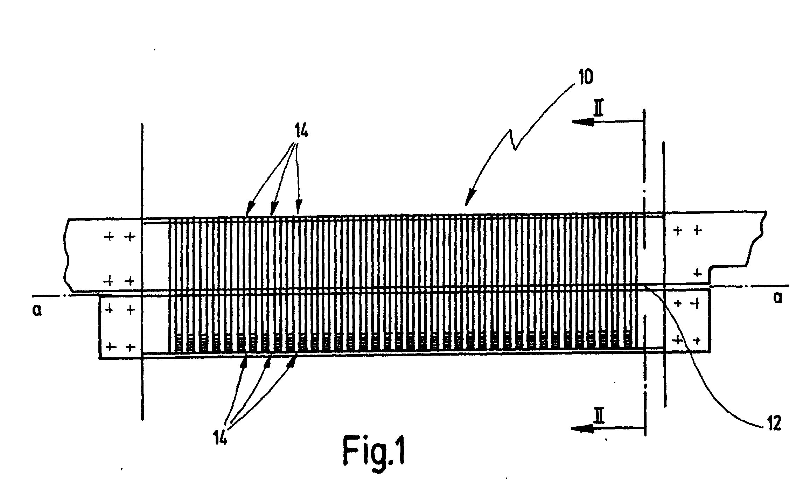

Der in Figur 1 als Ganzes mit 10 bezeichnete Maschinentisch einer Plattensägemaschine weist einen sich in deren Trennebene a-a befindenden, sich über die gesamte Tischbreite erstreckenden und den Maschinentisch 10 in vertikaler Richtung durchsetzenden Schnittspalt 12 für ein unter Tisch fahrendes Sägeaggregat auf.

Oberhalb des Schnittspalts 12 ist üblicherweise, was nicht dargestellt ist, ein anheb- und absenkbarer Druckbalken vorgesehen, mit dessen Hilfe aufzuteilendes Plattenmaterial auf Plattenauflageleisten 14 festlegbar ist, die auf der oberen Tischfläche 16 zu beiden Seiten des Schnittspaltes 12 quer zu diesem in seitlichem Abstand voneinander und zueinander fluchtend befestigt sind.

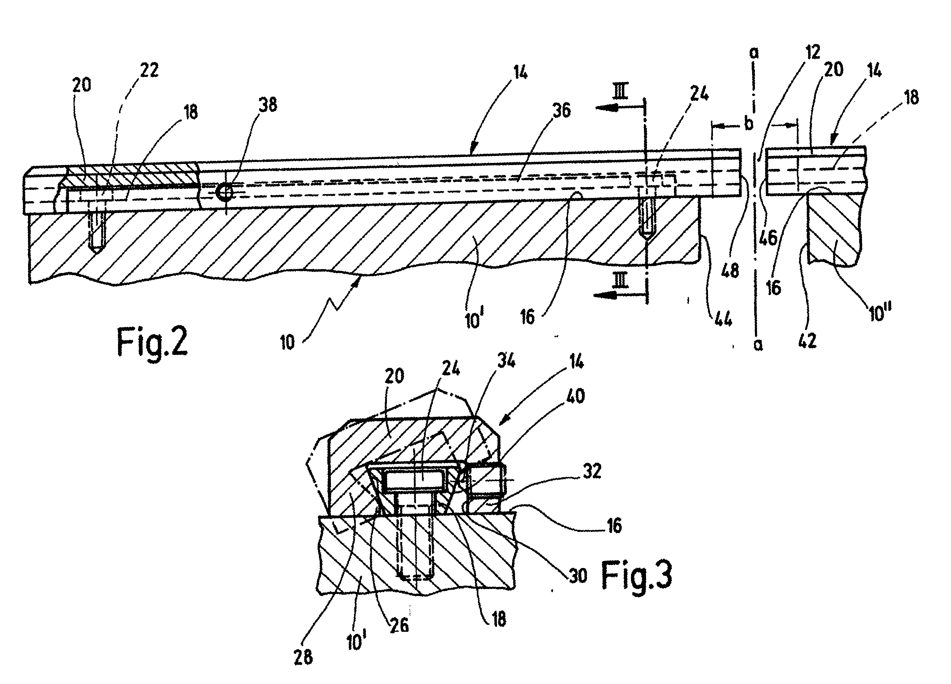

Wie aus den Figuren 2 und 3 zu ersehen ist, sind die Plattenauflageleisten 14 jeweils durch zwei Leistenteilstücke 18 und 20 gebildet, von denen das mit 18 bezeichnete auf der Tischfläche 16 mittels Befestigungsschrauben 22 und 24 festlegbar ist, während das mit 20 bezeichnete am tischfesten Leistenteilstück 18 längsverschiebbar und feststellbar vorgesehen ist.

Das relativ zum tischfesten Leistenteilstück 18 bzw. zur Trennebene a-a verstellbare Leistenteilstück 20 übergreift dabei das stationäre Leistenteilstück 18 auf ganzer Länge, wobei deren Längen derart aufeinander abgestimmt sind, dass bei zuverlässiger Führung des oberen Leistenteilstückes 20 ein stufenloses Nachstellen desselben um eine relativ große Gesamtstrecke in Richtung auf die Trennebene a-a möglich ist.

Zu diesem Zweck weist das tischfeste Leistenteilstück 18 eine geringere Länge als die Abmessung der dasselbe tragenden Tischplattenhälften 10' bzw. 10" senkrecht zur Trennebene a-a auf, während das verstellbare Leistenteilstück 20 über beide Enden des von diesem übergriffenen Leistenteilstückes 18 vorsteht.

Wie Figur 3 zeigt, ist das tischfeste Leistenteilstück 18 im Querschnitt vorzugsweise schwalbenschwanzförmig ausgebildet, während das verschiebbare Leistenteilstück 20 im Querschnitt umgekehrt U-förmig ist, wobei die innere Längsfläche 26 seines einen U-Schenkels 28 eine zur Schräge der einen Längsfläche des Leistenteilstückes 18 komplementäre Schräge aufweist und an dieser anliegt, während die innere Längsfläche 30 des anderen U-Schenkels 32 in seitlichem Abstand zur benachbarten Längsseite des Leistenteilstückes 18 und senkrecht zur oberen Tischfläche 16 vorgesehen ist.

In diesem U-Schenkel 32 sind in Leistenlängsrichtung im Abstand voneinander zwei, jeweils einen Kegelansatz 34 aufweisende Gewindestifte 36 und 38 eingeschraubt, die zu ihrer Betätigung vorzugsweise mit einem Innenmehrkant ausgestattet sind.

Mit ihrem Kegelansatz 34 sind die Gewindestifte 36 und 38 an die dem U-Schenkel 32 benachbarte Schrägfläche 40, des tischfesten Leistenteilstückes 18 zum Arretieren des Leistenteilstückes 20 anlegbar, wobei im Zusammenwirken der Kegelansätze 34 mit der Schrägfläche 40 aufgrund des schwalbenschwanzartigen Querschnittes des Leistenteilstückes 18, eine Kraftkomponente wirksam wird, die versucht, das Leistenteilstück 20 mit seinen U-Schenkeln 28, 32 satt an die obere Tischfläche 16 anzulegen.

Wie Figur 2 zeigt, ragen die auf beiden Tischplattenhälften 10', 10" zueinander fluchtend angeordneten Leistenteilstücke 20 über deren einander gegenüberliegenden Längskanten 42 und 44 hinaus und definieren mit ihren vorderen Stirnflächen 46 und 48 den Schnittspalt 12.

Durch Schnittdruck bedingtes Flattern eines oder mehrerer, aus dem Schnittspalt 12 austauchenden Kreissägeblätter des unter Tisch fahrenden Sägeaggregats werden die beiden Stirnenden der vorzugsweise aus Leichtmetall bestehenden Leistenteilstücke 20 abgetragen, so dass sich der Schnittspalt 12 über einen bestimmten Zeitraum sukzessive erweitern wird. Abgesehen von einer im Schnittbereich nicht mehr befriedigenden Abstützung des Schnittgutes hat dies zur Folge, dass Plattenanschnitt- und Reststreifen in den Schnittspalt gelangen bzw. eingezogen werden können, was insbesondere im Falle paketiert aufzuteilender Platten zu einer starken Verunreinigung des geschlossenen Maschinenkörpers führen kann. Strichpunktiert ist dabei eine maximal tolerierbare Spalterweiterung b angedeutet.

Nach Erreichen einer gewissen Spaltweite wird deshalb eine Neueinstellung der Schnittspaltbreite notwendig. Dies lässt sich in einfacher Weise durch Lösen der Gewindestifte 36, 38 und entsprechendes Aufeinanderzubewegen der einander fluchtend gegenüberliegenden Leistenteilstücke 20 bewerkstelligen, wobei diese zu ihrer genauen Einstellung an ein in Schnittposition hochgesteuertes Kreissägeblatt zur Anlage gebracht werden können.

Der erläuterte Querschnitt der Leistenteilstücke 20 erlaubt dabei ein Auswechseln derselben, ohne diese der Länge nach vom zugehörigen tischfesten Leistenteilstück 18 herunterschieben zu müssen; vielmehr lässt sich dasselbe, ohne dass benachbarte Plattenauflageleisten 14 zu demontieren sind, wie in Figur 3 strichpunktiert angedeutet, durch zu einer Leistenlängsseite hin gerichtetes Hochschwenken bewerkstelligen.

## Patentansprüche

1. Plattenauflageleiste für Maschinentische von Plattensägemaschinen, die auf der Tischoberseite (16) im Seitenabstand zu benachbarten Auflageleisten (14) gleicher Ausbildung beiderseits und quer zu einem einen Maschinentisch (10) für ein unter Tisch fahrendes Sägeaggregat in vertikaler Richtung durchsetzenden Schnittspalt (12) angeordnet und durch zwei Leistenteilstücke (18, 20) gebildet ist, von denen das eine tischfest und das andere, unmittelbar am Schnittspalt (12) endend, zu diesem auswechselbar vorgesehen ist, wobei das auswechselbare Leistenteilstück (20) am tischfesten Leistenteilstück (18) quer zu einer den Schnittspalt (12) enthaltenden Trennebene (a-a) verstellbar und feststellbar angeordnet ist, **dadurch gekennzeichnet, dass** das auswechselbare Leistenteilstück (20) das tischfeste Leistenteilstück (18) übergreift.

2. Plattenauflageleiste nach Anspruch 1, **dadurch gekennzeichnet, dass** das verstellbare Leistenteilstück (20) relativ zum tischfesten Leistenteilstück (18) stufenlos verschiebbar ist.

3. Plattenauflageleiste nach Anspruch 1 oder 2, **dadurch gekennzeichnet, dass** das auswechselbare Leistenteilstück (20) mittels einer Flachführung auf dem tischfesten Leistenteilstück (18) verschiebbar geführt ist.

4. Plattenauflageleiste nach einem der vorhergehenden Ansprüche 1 bis 3, **dadurch gekennzeichnet, dass** beide Leistenteilstücke (18, 20) miteinander schwalbenschwanzartig in Eingriff sind.

5. Plattenauflageleiste nach einem der vorhergehenden Ansprüche 1, 2 oder 4, **dadurch gekennzeichnet, dass** der Eingriff beider Leistenteilstücke (18, 20) zueinander derart ist, dass das verschiebbare Leistenteilstück (20) vom tischfesten Leistenteilstück (18) durch zu einer Leistenlängsseite hin gerichtetes Hochschwenken abnehmbar ist.

6. Plattenauflageleiste nach einem der vorhergehenden Ansprüche, **dadurch gekennzeichnet, dass** das verschiebbare Leistenteilstück (20) an einer seiner Längsseiten angeordnete und an eine seitliche Gegenfläche des tischfesten Leistenteilstückes (18) anlegbare Spannmittel (36, 38) aufweist.

7. Plattenauflageleiste nach einem der vorhergehenden Ansprüche 4 bis 6, **dadurch gekennzeichnet, dass** als Spannmittel an der Leistenlängsseite Gewindestifte (36, 38) vorgesehen sind, die mit einem Kegelansatz (34) an eine seitliche, von oben schräg nach innen und unten gerichtete Schrägfläche (40) des tischfesten Leistenteilstückes (18) anlegbar sind.

## Claims

1. A panel support bar for machine tables of plate saws, which, at a lateral distance from adjoining support bars (14) of identical design, is arranged on the table top (16) at both sides and transversely in respect to a cutting gap (12), which gap penetrates through the table in the vertical direction for a saw unit moving under the table, and which support bar is constituted by two partial bar elements (18, 20), one of which is fixed to the table and the other, which terminates directly at the cutting gap (12), is provided to be exchangeable in respect to the latter, wherein the exchangeable partial bar element (20) is arranged on the partial bar element (18) which is fixed in place on the table in such a way that it can be displaced transversely in respect to a separating plane (a - a) containing the table gap (12), and can be fixed in place, **characterized in that** the exchangeable partial bar element (20) extends over the partial bar element (18) fixed to the table.

2. The panel support bar in accordance with claim 1, **characterized in that** the displaceable partial bar element (20) can be displaced in an infinitely variable manner in respect to the partial bar element (18) fixed to the table.

3. The panel support bar in accordance with claim 1 or 2, **characterized in that** exchangeable partial bar element (20) is guided so that it can be displaced by means of a flat guide device on the partial bar element (18) fixed to the table.

4. The panel support bar in accordance with one of the preceding claims 1 to 3, **characterized in that** both partial bar elements (18, 20) are in engagement with each other in a dovetailed manner.

5. The panel support bar in accordance with one of the preceding claims 1, 2 or 4, **characterized in that** the engagement of the two partial bar elements (18, 20) with each other is of such a nature that the displaceable partial bar element (20) can be removed from the partial bar element (18) fixed to the table by being pivoted upward in a direction toward one longitudinal bar side.

6. The panel support bar in accordance with one of the preceding claims, **characterized in that** the displaceable partial bar element (20) has clamping means (36, 38), which are arranged at one of its longitudinal sides and can be placed against a lateral counter-face of partial bar element (18) fixed to the table.

7. The panel support bar in accordance with one of the preceding claims 4 to 6, **characterized in that** set screws (36, 38) are provided as the clamping means at the longitudinal bar side, which, by means of a conical shoulder (34), can be placed against an inclined face (40), which is obliquely directed from above toward the interior and downward, of the partial bar element (18) fixed to the table.

## Revendications

1. Barre de guidage de plaques pour tables de machine de machines de découpage de plaques, qui est disposée sur la face supérieure de la table (16), à une distance latérale par rapport aux barres de guidage de plaques (14) voisines de même conformation, sur les deux côtés et qui est transversale par rapport à un intervalle de coupe (12), qui traverse une table de machine (10) en direction verticale et qui est destinée à une unité de sciage mobile sous une table, et qui est constituée de deux parties de barre (18, 20) dont l'une est prévue fixée sur la table et l'autre, se terminant directement au niveau de l'intervalle de coupe (12), est prévue avec possibilité de remplacement, la partie de barre remplaçable (20) étant disposée avec possibilité de déplacement et de fixation, transversalement par rapport à un plan de séparation (a-a) qui contient l'intervalle de coupe (12), sur la partie de barre fixée sur la table (18), **caractérisée en ce que** la partie de barre remplaçable (20) enveloppe la partie de barre fixée sur la table (18).

2. Barre de guidage de plaques selon la revendication 1, **caractérisée en ce que** la partie de barre remplaçable (20) est montée à coulissement de manière continue par rapport à la partie de barre fixée sur la table (18).

3. Barre de guidage de plaques selon la revendication 1 ou 2, **caractérisée en ce que** la partie de barre remplaçable (20) est guidée à coulissement sur la partie de barre fixée sur la table (18) au moyen d'un dispositif de guidage plat.

4. Barre de guidage de plaques selon l'une des revendications précédentes 1 à 3, **caractérisée en ce que** les deux parties de barre (18, 20) sont en prise l'une avec l'autre par une forme en queue d'aronde.

5. Barre de guidage de plaques selon l'une des revendications précédentes 1, 2 ou 4, **caractérisée en ce que** la prise des deux parties de barre (18, 20) l'une sur l'autre est telle que la partie de barre remplaçable (20) peut être ôtée de la partie de barre fixée sur la table (18) par un mouvement de pivotement vers le haut dans la direction d'une face latérale de la barre.

6. Barre de guidage de plaques selon l'une des revendications précédentes, **caractérisée en ce que** la partie de barre remplaçable (20) comporte des moyens de serrage (36, 38) disposés sur une contre-surface latérale de la partie de barre fixée sur la table (18), et sur une des faces longitudinales de la partie de barre remplaçable (20).

7. Barre de guidage de plaques selon l'une des revendications précédentes 4 à 6, **caractérisée en ce qu'**il est prévu, en tant que moyens de serrage, des tiges filetées (36, 38) qui sont disposées sur la face latérale de la barre et qui peuvent être appliquées, par un appendice tronconique (34), sur une face inclinée latérale (40) de la partie de barre fixée sur la table (18) qui est dirigée obliquement du haut vers le bas.
